# EUROPEAN PATENT APPLICATION

(11) **EP 4 738 908 A1**
(43) Date of publication of application: **06.05.2026**
(21) Application number: 24210544.3
(22) Date of filing: 04.11.2024
(51) Int. Cl.: H04W 12/60, H04L 9/00, H04L 9/32, H04L 67/303, H04W 88/08, H04W 12/069

(54) **METHOD FOR PROFILING A DEVICE BY AN ACCESS POINT BASED ON A HASH ALGORITHM, ACCESS POINT USED THEREFOR, AND METHOD FOR ASSIGNING A HASH ALGORITHM TO A DEVICE, APPARATUS USED THEREFOR**

(71) Applicant: Vestel Elektronik Sanayi ve Ticaret A.S., 45030 Manisa (TR)
(72) Inventor: AYGÜL, Mehmet Ali, 45030 Manisa (TR); KIRISKEN, Barbaros, 35570 Karsiyaka-Izmir (TR)
(74) Representative: Hoffmann Eitle

(57) **Abstract**

Provided is a method for profiling a device by an access point based on a hash algorithm, comprising the steps of, by the access point, receiving data from the device, identifying a hash algorithm based on the received data, and, based on the hash algorithm, determining a profile corresponding to the device. Moreover, provided is an access point comprising means for carrying out said method. Furthermore, provided is a method for assigning a hash algorithm to a device, comprising the steps of learning a profile of the device, and, based on the profile, assigning a hash algorithm to the device. Moreover, provided is an apparatus comprising means for carrying out said method.

## Description

### Technical Field

The present invention relates to profiling of a device based on a hash algorithm. In particular, the present invention relates to a method for profiling a device by an access point based on a hash algorithm, an access point comprising means for carrying out said method, a second method for assigning a hash algorithm to a device, and an apparatus comprising means for carrying out said second method.

### Background

Access points, APs, allow devices to connect to a network. By way of non-limiting example, an access point may be provided in a home network, wherein said access point is connected by wire to a router. Now, a device, such as a laptop, may wirelessly connect to the access point. The access point may then relay any information transmitted from the device to the router, and relay any information transmitted from the router to the device. Depending on a respective device, an access point may be configured differently. This is often referred to as "profiling" a device or "setting up a profile for a device or a type of a device". E.g., a first set of security-related parameters may be set in the access point for relaying data between a router and a TV screen. Meanwhile, a second set of security related parameters may be set in the access point for relaying data between the router and a laptop. The respective sets of parameters are often referred to as profiles. The respective configurations of parameters at the access point may then be referred to as "profile" and the process of configuring said parameters in relation to types of devices may be referred to as "profiling".

The above concept of "profiling" can be found in various network-configurations or types of networks involving access points. Some non-limiting examples of such networks comprise as a local area network, or a network compliant with WiFi standards, or a 4G or 5G telecommunications network.

Conventionally, said profiles are configured manually, e.g., through the interface of an access point or using other network management tools.

Setting up the mentioned profiles in an access point usually requires knowledge of the properties of the respective devices, knowledge of the access point's technical specifications, and knowledge and experience in handling the interface of the access point or other network tools required for configuring the access point.

This results in work-intense and error-prone situations when setting up a network involving access points.

### Summary

One of the objects of the present invention is to overcome at least one of the mentioned problems or to improve at least one of the prior art solutions. This object is achieved by the subject-matter according to the independent claims. Further preferred embodiments are given by the subject-matter according to the dependent claims.

According to an aspect of the present invention, there is provided a method for profiling a device by an access point based on a hash algorithm, comprising the steps of: by the access point, receiving data from the device, identifying a hash algorithm based on the received data, and based on the hash algorithm, determining a profile corresponding to the device.

According to a further aspect of the present invention, there is provided a method for assigning a hash algorithm to a device, comprising the steps of: learning a profile of the device, and based on the profile, assigning a hash algorithm to the device.

### Brief description of the drawings

Embodiments of the present invention, which are presented for better understanding the inventive concepts, but which are not to be seen as limiting the invention, will now be described with reference to the figures in which:
Figure 1 shows a flow chart corresponding to a first embodiment of the method for profiling a device by an access point based on a hash algorithm.
Figure 2 shows a second embodiment of the method for profiling a device by an access point based on a hash algorithm.
Figure 3 shows an example according to a third embodiment of the method for profiling a device by an access point based on a hash algorithm.
Figure 4 shows a table according to an example according to a fourth embodiment of the method for profiling a device by an access point based on a hash algorithm.
Figure 5 shows a fifth embodiment of the method for profiling a device by an access point based on a hash algorithm.
Figure 6 shows an example according to a sixth embodiment of the method for profiling a device by an access point based on a hash algorithm.
Figure 7 shows an example according to a seventh embodiment of the method for profiling a device by an access point based on a hash algorithm.
Figure 8 shows an embodiment of a method for assigning a hash algorithm to a device.
Figure 9 shows a table according to a further embodiment of the method for assigning a hash algorithm to a device.
Figure 10 shows a further embodiment of a method for assigning a hash algorithm to a device.
Figure 11 shows a further embodiment of a method for assigning a hash algorithm to a device.
Figure 12 shows a further embodiment of a method for assigning a hash algorithm to a device.
Figure 13 shows an example according to a further embodiment of the method for assigning a hash algorithm to a device.
Figure 14 shows an embodiment of an access point comprising means for carrying out the method for assigning a hash algorithm to a device.
Figure 15 shows an embodiment of an apparatus comprising means for carrying out the method for assigning a hash algorithm to a device.
Figure 16 shows a non-limiting example of a production phase of the device for user profiling.
Figure 17 shows a non-limiting of how an AP makes profiles of a user.

### Detailed description

As explained above, setting up access points manually has disadvantages like error-proneness and being work-intense. To overcome at least one of these disadvantages and/or improving existing solutions the inventors have conceived, amongst other aspects, a method for profiling a device based on hash algorithms that are used for communication between the device and an access point, and of assigning a specific hash algorithm to a device based on the device's properties (profile). This allows for a simplified configuration of an access point.

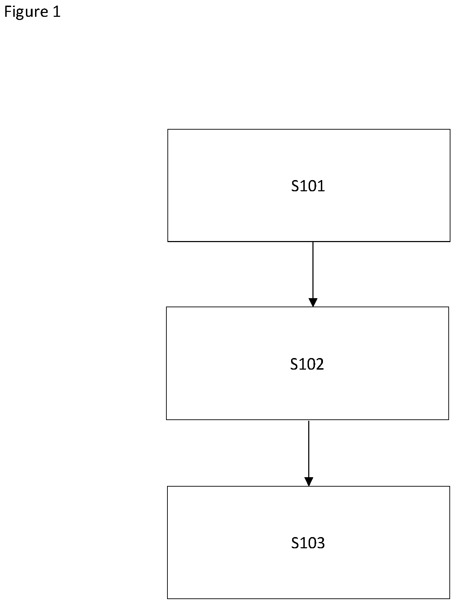

Figure 1 shows a flow chart corresponding to a first embodiment of a method for profiling a device by an access point based on a hash algorithm, comprising the steps of: by the access point, AP, receiving data from the device, step S101, identifying a hash algorithm based on the received data, step S102, and based on the hash algorithm, determining a profile corresponding to the device, step S103.

Said method may be computer implemented. There may be a computer program [product] comprising instructions which, when the program is executed by a computer, cause the computer to carry out [the steps of] said method. There may be a computer-readable [storage] medium comprising instructions which, when executed by a computer, cause the computer to carry out [the steps of] said method.

Profiling a device by an access point may also be referred to as: at the access point, determining a set of communication-related parameters, for communication with the device. This may also be referred to as determining a profile of the (for the) device. Moreover, said profiling may be rephrasing as determining a profile of a device by an access point. The word 'profile' may have any of the meanings as discussed below and above.

An access point may be an apparatus for receiving data from a device and for transmitting data to the same or another device. The access point may relay (transfer) messages (data) from a device to another device. The access point may relay messages (data) from the other device to the device. Thereby, the access point may provide a connection to a network. The access point may provide a device with access to a network. The network may be a set of connected devices, e.g., computers, servers, routers, switches, bridges, etc. that connect two apparatuses. An example of connected apparatus is a server being connected to a personal computer. The network may be a wireless local area network, W-LAN. The network may be a network in compliance with a standard, such as the various versions of IEEE 802.11 or releases of 3GPP specifications for 4G, 5G, or any other earlier or later version of mobile telecommunications networks. For instance, the network may be based on the hypertext transfer protocol, http. However, the network may also be configured based on a 3GPP standard specifications, e.g., on one relates of TS38.311 and respective corresponding technical specifications. The network may be the internet. The network may be a 4G or 5G, or any later standardized telecommunications network. In an internal environment, an access point may usually operate over 20 to 30 meters of radial distance. In an external environment, an access point may usually operate over 100 to 150 meters of radial distance. Operating here may mean that the access point is configured to provide an access to said network within said distances. Said distances may also be referred to as 'area of coverage'.

An access point may be connectable to devices either by wireless connection or by a wired connection. An access point may provide a wireless connection to a device (client) and a wired connection to a network, e.g., a local area network, or to a device providing access to a network, e.g., a router. The access point may provide an interface between the internet and a device (client). The access point may also be integrated into a conventional (W-LAN) router, wherein the router provides access to the internet. The access point may also be a base station, or node used in telecommunications networks, such as 4G, 5G, or any later version of telecommunications networks.

A device may be an apparatus for receiving data from another device, and for transmitting data to another device. A device may be connectable to a network, e.g., the internet or a 4G or 5G network, by using the access point. A device may be connectable to the access point. The connection may be a wireless connection or a wired connection. Using the connection, the device may exchange messages, which may comprise data, with the access point. A device may be configured to process data based on messages/data and to transmit messages/data based on the processed data, wherein the messages may comprise the processed data. Non-limiting examples of a device comprise a TV screen, a laptop, a personal computer, sensors, micro-controllers and other devices used in Internet of Things (IoT) applications, a smartphone, a telephone, a tablet, a computer screen, headphones.

A hash algorithm may be an algorithm that provides a mapping of a binary string of an arbitrary number of bits (a string of any length) to a binary string comprising a fixed number of bits (a fixed length hash value). An algorithm may comprise a number of instructions (or steps), which may be executed by a computer. By executing said instructions, an aim shall be reached. As an aim, a hash algorithm may be used for encrypting messages. The encrypted messages may be sent from the device to the access point or from the access point to the device. Stated differently, the access point and the device may exchange encrypted messages. The hash algorithm may also be referred to as a cryptographic hash function, or hash function. Specific examples of a hash algorithm comprise hash functions, such as MD4, MD5, SHA-1, SHA-2, etc. A hash algorithm may be implemented according to various specification of technical standards. Examples of said standards comprise:
- IEEE 802.11 Standards (WiFi Standards), where the use of different hash algorithms (e.g., MD5, SHA1, SHA256, BCRYPT, MD5-CRYPT) is discussed under the security measures addressed in the IEEE 802.11 standards, particularly in amendments like 802.11i (WPA2) and 802.11ax (WPA3).
- NIST (National Institute of Standards and Technology) related standards, where hash algorithms (e.g., MD5, SHA1, SHA256) are widely discussed in NIST publications, such as the FIPS (Federal Information Processing Standards) and SP (Special Publications) series, which provide guidelines for the use of cryptographic algorithms.
- IETF (Internet Engineering Task Force) specifications and documentations, wherein the Simultaneous Authentication of Equals (SAE) protocol is part of the WPA3 security suite and is standardized by the IETF in RFC 7664.
- ISO/IEC 10118-3, wherein this standard covers hash-functions and includes MD5 and other hash functions used in digital signatures and other security protocols.

The access point may receive data from the device through a wired connection or through a wireless connection or a wired connection. The wireless connection may comply with a version of the IEEE 802.11 standards. The wireless connection may comply with a technical specification of a 3GPP telecommunications standard.

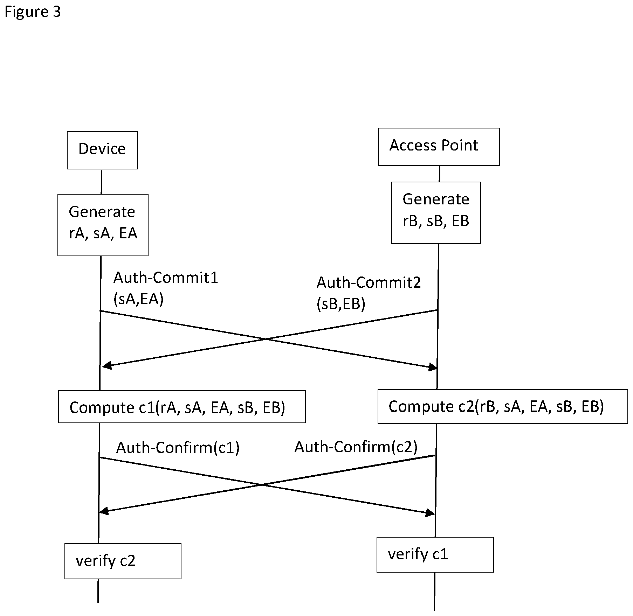

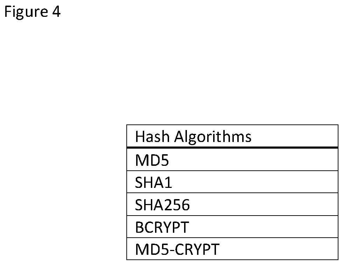

In 'Identifying a hash algorithm based on the received data', the term 'identifying' may also be rephrased as: 'determining', or 'selecting', or 'finding', or 'detecting', or 'noticing', or 'observing', or 'deriving'. Moreover, 'based on' may also be expressed as: 'by processing', or 'by using', or 'by making a choice based on'. By way of non-limiting example, a hash algorithm, such as MD5 or SHA256 or any other of the examples discussed above or below, or any other known hash algorithm that may be used, may be identified based on received data, such as 'Auth-Confirm' message used in an SAE, simultaneous authentication of equals, handshake. More specifically, as detailed further below, an SAE handshake involves a device (client) and an access point exchanging an 'Auth-Confirm', authentication confirmation message, also named confirmation message. This message, e.g., the received data, may be generated by encrypting a set of parameters (e.g., the parameters detailed further below with respect to figure 3) using a hash function and a key. The key and the parameters may be known (shared) by the device and the access point. The hash function (hash algorithm) used by the device (or vice versa: the hash function used by the access point) may not be known by the access point (the device). However, the SAE handshake may only allow for a fixed number of hash algorithms to be used for encryption. These hash algorithms may be the five algorithms depicted in figure 4. Thus, by sequentially using each of these algorithms, the access point may identify (determine) the hash algorithm which has been by the device (access point) for encrypting said message. More specifically, the access point may first decrypt (or encrypt) said confirmation message using the shared key and using a first hash algorithm, e.g., MD5. If the decrypted parameters included in the decrypted confirmation message do not match the known parameters at the access point, the access point may decrypt said message using a second hash algorithm, e.g., SHA256. If the decrypted parameters match the known parameters, the access point may identify the respective algorithm, e.g., SHA256, as the hash algorithm for determining a profile. Otherwise, the access point may proceed decrypting said message with another hash algorithm, e.g., one of the algorithms depicted in figure 4. If all algorithms depicted in figure 4 have been used but the decrypted message did not comprise the shared parameters, e.g., sA, EA, sB, EB as discussed below, the access point may determine that verification of the confirmation was not successful and that the supposedly shared key is incorrect. However, the hash algorithm used for encrypting said message may also be known by the device and access point in advance. In this case, identifying a hash algorithm based on received data may refer to the access point accessing data stored in the access point, wherein said data indicates the hash algorithm in combination with an identifier, wherein the identifier may be included in the received data. Other modes and mechanisms of identifying a hash algorithm based on received data may be used as well. For instance, the received data, e.g., a hash value comprised in a message, may have a property, e.g., a length of a respective hash value, which may be expressed in number of characters or bits. Based on said property, a corresponding hash algorithm may be selected (identified) by the access point. Various other, known software-based approaches, e.g., hash analyzers, hash identifiers, hash type identifiers, may be used for identifying said hash algorithm.

In general, identifying a hash algorithm based on received data may comprise that the received data is a message sent by a device, wherein said message comprises a sequence of bits or a sequence of hexadecimal numbers. Said sequence bits or hexadecimal numbers may generated by a hash algorithm. Said sequence may be called a hexadecimal string, or a 'hex string'. Said sequence may represent (correspond to, be) a (provided, input) hash value. Said identifying may further comprise the step of determining the length of the sequence. An example of said length is the length of a hexadecimal string. Said identifying may further comprise the step of determining a hash algorithm based on said length.

A non-limiting example of the above concept is that an AP receives a message from a device, wherein said message comprises data, that may be represented by a sequence of bits, and a hash value, that may be represented by a string of bits or a hexadecimal string. E.g., said data may be '010101' and said hash value may be 'abab'. Now, the AP may determine the length of said hash value represented by said string using known methods. E.g., the length of the example hash value 'abab' may be determined as '4'. Here, each length may correspond to at least one hash algorithm. E.g., a length of 4 may correspond to MD5. Then, the AP may determine the hash algorithm as the hash algorithm which corresponds to said length. E.g., the AP may identify MD5 as hash algorithm.

Said determining of the hash algorithm may comprise the further step of verifying the hash algorithm. The verifying step may comprise determining (computing) a computed / test hash value by applying the determined hash algorithm to the (received) data comprised in the received message, and comparing the test hash value to the hash value included in said message. E.g., the data comprised in said message may be '010101', the determined hash algorithm may be 'MD5', the hash value comprised in said message may be 'abab' and the test hash value, which is computed by applying MD5 to '010101' may be 'abab'. If the test hash value ('abab' computed from '010101' using MD5) is equal to the hash value comprised in said message (abab), the determined hash algorithm is identified (verified) as a correct (verified) hash algorithm. If the test hash value is not equal to (does not match) the hash value comprised in said message, the determined hash algorithm is not identified as the (verified) hash algorithm.

Further non limiting examples of the above approach are discussed in the following.

### Example 1: Identification of Hash Algorithm in Secure API Request

An access point (AP) receives a request as received data, e.g., an application programming interface, API, request, from a smart home device. Examples of said smart home device comprise a thermostat or a camera. Said request may include a hash value for authenticating the request.

The problem here may be for the AP to determine (identify) which hash algorithm generated this hash so it can validate the request and apply the right security measures.

As input Data one may consider that the AP receives an input hash value included in the request, e.g., 098f6bcd4621d373cade4e832627b4f6. Examples of known hash algorithms in use may be MD5, SHA-1, and SHA-256.

Now, the AP may start by determining (checking) the length of the received hash value. MD5, as an example of a specific hash algorithm, typically produces a 32-character hexadecimal string (character string of a length of 32 hexadecimal characters), SHA-1 outputs (produces) a 40-character string, and SHA-256 gives (produces) a 64-character string. Based on the length, the AP may determine a hash algorithm. Given that the exemplary input hash value (character string) has a length of 32 characters, it may be determined that there is a (strong) indicator (in other words, it may be determined) that MD5 was used as a hash algorithm when generating the hash value included in the (API) request. As an example of the above verifying step, based on the indication, the AP then may compute the hash value applying (using) MD5 (as determined hash algorithm) to (on) the received data. The AP may then compare the computed hash value with the provided hash value.

Then, if the computed hash value matches (is equal to) the input hash value, e.g., 098f6bcd4621d373cade4e832627b4f6, the AP may determine that MD5 was the hash algorithm used when generating the input hash value.

The AP may then apply a security profile associated with MD5, wherein the security profile may be tailored for / correspond to a low to moderate security level.

### Example 2: Identifying a Hash Algorithm from File Integrity Verification

One may consider a device that uploads a firmware update file (as a first part of received data) to an access point, AP. Along with the file, the device sends an (input) hash value for integrity verification (as a second part of received data). Said hash value may have been generated by a hash algorithm, e.g., one of the algorithms named below.

Here, an AP's task is to figure out which hash algorithm was used to ensure the file's integrity.

As input Data, one may consider a firmware file named firmware.bin, and the received input hash value may be a (long) string: cf83e1357eefb8bd1542850d66d8007d620e4050b5715dc83f4a921d36ce9ce47d0d375c54d2 7da0fbec09879bfcbc8fd6e1c02b29987c50d8b17e5f231b6a20.

Possible hash algorithms used for generating said input hash value may be MD5, SHA-1, or SHA-512.

Now, first, the AP may determine the length of the received input hash value. MD5 produces a string having a length of (in other words: MD5 results in/gives) 32 characters, SHA-1 results in 40 characters, and SHA-512 gives a 128-character string.

With a length of 128 characters, it's evident that SHA-512 was likely used.

The AP then may compute the hash value of firmware.bin using SHA-512 as a hash algorithm, and the AP may compare the computed hash value with the received hash value. Then, if the computed hash value is equal to (matches) the input hash value, the AP may identify SHA-512 as the hash algorithm and may confirm the file's integrity using SHA-512. Given the robust nature of SHA-512, the AP may then apply a high-security profile. In other words, the AP may then apply a security profile associated with SHA-512, wherein the security profile may be tailored for (correspond to) a high security level.

### Example 3: Identifying a Hash Algorithm in Encrypted Wi-Fi Communication

During the setup of encrypted communication, a device sends a message (as received data) to the AP, said message may contain a hashed authentication code, or HMAC. The AP may authenticate the message based on the HMAC. Moreover, the AP may identify the hash algorithm used for generating the HMAC.

An example of the received HMAC value is:
a7ffc6f8bf1ed76651c14756a061a09ba1fdb9bcba477d11b9c6e1b7bb8dd0a2
An example of algorithms in question could be SHA-1, SHA-256, or SHA3-256.

Now, the AP determines (checks) the length of the HMAC value: SHA-1 produces a string of length of 40 characters, while both SHA-256 and SHA3-256 result in strings of 64 character - length. With a 64-character length, the hash could be either SHA-256 or SHA3-256. In other words, the string-length of the input hash value (HMAC) may be the same, or the string-length may be equal (e.g., 64 hexadecimal characters) for two hash algorithms (e.g., SHA-256 and SHA3-256). If the length of the input hash value is equal for (corresponds to) two distinct hash algorithms, the AP may compute a corresponding comparison hash value, e.g., an HMAC, based on each of both hash algorithms. E.g., the AP may compute a first comparison hash value, e.g., HMAC, based on a first hash algorithm, e.g., SHA-256, and the AP may compute a second comparison hash value, e.g., HMAC, based on a second hash algorithm, e.g., SHA3-256. Based on the first comparison hash value and the second comparison hash value, the AP may determine which comparison value is equal to (matches) the input hash value.

E.g., if the HMAC generated with SHA3-256 matches the HMAC contained (included in) the message that was sent to the AP by the device, the AP determines (confirms, identifies) SHA3-256 as used and applies a corresponding security profile, which is likely to be a high-security setting given the strength of SHA3-256. In other words, the AP may apply a security profile associated with SHA3-256, wherein the security profile may be tailored for (correspond to) a high security level.

On the other hand, if the HMAC generated with SHA3-256 does not match HMAC contained/comprising in the message, SHA3-256 is not identified as hash algorithm.

If the HMAC generated with SHA-256 is equal to (matches) the HMAC contained in the received message, SHA-256 is identified as hash algorithm.

If said generated HMAC is not equal the HMAC comprised in the received message, SHA-256 is not identified as hash algorithm.

A profile, or a profile corresponding to a device may be (comprise) a parameter or a set of parameters that are set at the access point for performing communications with the device. In other words, a profile may determine the configuration of the access point, wherein the configuration is used for exchanging (transmitting/receiving) data with a device. In other words, a profile may correspond to an access-point configuration, wherein transmitting/receiving data from another device is performed by said access-point configuration based on said profile. A profile corresponding to a device may mean that a profile is assigned (linked) to a device. The link between profile and device may be stored in advance (pre-configured) at the access point. A respective profile may be pre-determined, or pre-configured at the access point. There may be a 1:1 correspondence between said device and a profile, e.g., each device may be assigned one profile for use at the access point. However, it may also mean that there is a n:1 relationship between a number, n, of devices and one profile. E.g., each of 5 TV screens may be assigned the same first profile, and each of 10 tablets may be assigned the same second profile. E.g., a parameter or parameters may determine the physical properties of the messages transmitted from the access point to the device. E.g., a parameter may determine the transmission power used by the access point for transmitting a message to the device, or the number of beams used for transmitting data. Moreover, a parameter may determine the size of (the number of bits used for) a body of an IEEE 802.11 compliant frame. Moreover, a parameter may determine the encryption algorithm used from encrypting sent messages, or a parameter may be used for encrypting messages based on a hash algorithm. Moreover, a parameter may indicate the type of a client, e.g., the client being a laptop, or a smartphone, or a TV screen, that a message is transmitted to. A parameter may indicate configurations as described in releases of 3GPP technical specifications used for transmitting and/or receiving messages from a device by a base station or node in a 4G or 5G or any later or earlier version network. Moreover, the parameter or set of parameters corresponding to a respective profile may be changed if the access point receives a corresponding instruction-message, e.g., from a control-device connected to the access point via the internet. For instance, a number of bits (length) of a key or digest of a hash algorithm (the length being an example of a parameter) may be initially set to 128 bit for a profile 'A', and, upon receipt of a respective instruction-message, may be changed to 256 bit for profile 'A'.

The concept of 'determining a profile based on a hash algorithm' may be expressed as choosing a profile corresponding to a hash algorithm. Said concept may also be expressed as selecting a profile associated with a hash algorithm. The association between hash algorithm and profile may be indicated by a table. Said table may be stored at the access point. Said table may be generated beforehand by one of the methods discussed below. Alternatively, said table may be set up and stored at the access point by an engineer during production of said access point. A more specific example of determining said profile based on a hash algorithm is looking up a table, wherein said table denotes a relationship between a hash algorithm (that may be one out of a plurality of hash algorithms) and a profile (that may be one out of a plurality of profiles). Here, taking the hash algorithm as input, a profile may be found, or: determined. E.g., one may consider the following table 1:

**Table 1**

| Hash algorithm: | Profile: |
|---|---|
| SHA256 | high security profile |
| MD5-CRYPT | low security profile |

Here, an access point may have identified SHA256 as hash algorithm. Now, the access point looks up the above table and finds 'high security profile'. Thus, the access point selects (determines) 'high security profile' as a profile. The access point may be configured to store said table. Said table, or any other information indicating a relation between a hash algorithm and a profile may be pre-stored at the access point. The above concept of 'determining a profile based on a hash algorithm' may also be expressed as deciding to use a profile based on information indicating a relationship between said hash algorithm and a profile. Said information may be the above table. The mentioned information indicating a relationship between a hash algorithm and a profile, such as the above exemplary table, may also be changed (re-configured). E.g., an above table which may be stored at the access point may be changed after the step of the access point has received a change-table-indication message, wherein said message may indicate that the access point shall change said data in a specific way. E.g., it may be indicated that another row shall be included in table 1 comprising the entries MD5 and 'mid-level security profile'. Or it may be indicated that entries on column 'profile' shall be exchanged, such that SHA256 corresponds to low security profile and MD5-CRYPT corresponds to high security profile.

For this solution, specifically, by determining a profile based on the hash algorithm, one of the advantages lies in that it is possible to set up profiles at the access point automatically, thereby reducing errors and reducing workhours when configuring a network in comparison to prior art solutions.

The above embodiment may optionally comprise the additional steps and specifications as discussed in the following embodiments.

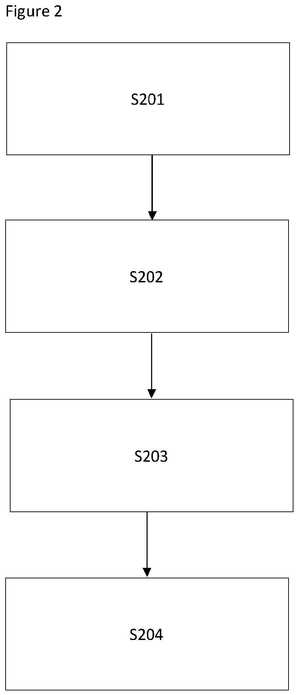

Figure 2 shows a second embodiment of the method for profiling a device by an access point based on a hash algorithm, comprising the further step of configuring the access point based on the determined profile, step S204. Step S201 corresponds to step S101 of figure 1. Step S202 corresponds to step S102 of figure 1. Step S203 corresponds to step S103 of figure 1. A detailed description is thus omitted here.

Configuring an access point may comprise setting a physical parameter and/or an operations-related parameter at the access point, wherein the parameters may be used by the access point for operating the access point and/or used for transmitting messages from the access point to a device and/or used for receiving messages by the access point from a device. Configuring an access point may also be rephrased as setting up an access point, or determining the settings of an access point. One example of configuring an access point by setting physical parameters is setting a frequency band to be used for transmissions and receiving of message, e.g., a 2.4 GHz or a 5GHz or 6 GHz (Giga-Hertz) band. Another example of configuring an access point is setting the signal strength (transmit power, usually denoted in dBm or units of watt) with which the access point transmits a signal. Another example of configuring an access point by setting an operations-related parameter is setting the encryption protocol and/or security standard, such as WPA2 or WPA3, to be applied when encrypting messages that are sent or transmitted from/to the access point to/by a device. Another example of configuring an access point by setting an operations-related parameter is setting the type of a telecommunications network and further communications-related parameters to be used in 4G or 5G network.

Advantageously, configuring an access point based on the determined profile allows for automating at least parts of the process of configuring an access point.

The above embodiment may optionally comprise the additional steps and specifications as discussed in the following embodiments.

Figure 3 shows an example according to a third embodiment of the method for profiling a device by an access point based on a hash algorithm, wherein the received data is a confirmation-message (Auth-Confirm) used in a Simultaneous Authentication of Equals (SAE) handshake between the access point and the device.

Figure 3 depicts a timing-chart showing a possible implementation of an SAE handshake. First, both the device and the access point may each generate distinct random numbers (first random number) rA, (second random number) rB. Each random number may be referred to as 'private'. Based on the respective random number, the device and the access point may compute a 'scalar', (first scalar) sA, and (second scalar) sB, respectively. Furthermore, based on a second random number (third random number) mA, (fourth random number) mB (computed at the device - mA - or the access point - mB - respectively), which may be called 'mask', the device and the access point may compute an 'element', (first element - at the device) EA, (second element - at the access point) EB, respectively. After that, the device may transmit a first message, Auth-Commit1, to the access point. Said message may indicate the first scalar sA and the first element EA computed by the device. Moreover, the access point may transmit a second message, Auth-Commit2, to the device. The second message may indicate the scalar second scalar sB and the second element EB computed by the access point. The first message may be transmitted before the second message. The second message may be transmitted before the first message. Both messages may be transmitted simultaneously. This principle is denoted by crossed arrows in Fig.3.

The device may receive the second message. Then, after receipt of the second message, the device may compute a first confirmation information c1 based on the first random number rA, the first scalar sA, the first element EA, the second scalar sB, and the second element EB. The computing of the first confirmation information c1 may be based on a hash algorithm. The hash algorithm may be the hash algorithm mentioned in the above and below parts of the description.

The access point may receive the first message. Then, after receipt of the first message, the access point may compute a second confirmation information c2 based on the second random number rB, the second scalar sB, the second element EB, the first scalar sA, and the first element EA. The computing of the second confirmation information c2 may be based on a hash algorithm. The hash algorithm may be the hash algorithm mentioned in the above and below parts of the description.

A specific example of computing the first confirmation information c1 comprises computing a secret point 'K' based on the first random number rA, the second scalar sB, a given prime number P (which is shared between the device and the access point), and the second element EB. For instance, the secret point K may be computed by: K=rA x (sB x P + EB). Here, 'x' may denote multiplication. Based on the secret point 'K', a key 'k' may be computed, e.g., by: k=Hash(K), wherein 'Hash(K)' denotes the application of a (cryptographic) hash function with K as input. Based on key k and the remaining parameters, the first confirmation information c1 may be computed, e.g., by c1=HMAC(k, sA, EA, sB, EB), wherein 'HMAC(x)' denotes computing a hash-based message authentication code with x, e.g.: the set of parameters: k, SA, EA, sB, EB, as input. A HMAC may be computed based on a (cryptographic) hash algorithm. This hash algorithm may be the hash algorithm mentioned in the above parts and the below parts of the description. Then, after computing the first confirmation information c1, the device may transmit a first authentication message, Auth-Confirm, which indicates the first confirmation information c1, which is denoted as "Auth-Confirm(c1)", to the access point.

A specific example of computing the second confirmation information c2 comprises computing another secret point 'K1' based on the second random number rB, the first scalar sA, the given prime number P (which is shared between the device and the access point), and the first element EA. For instance, the secret point K may be computed by: K=rB x (sA x P + EA). Based on the other secret point 'K1', another key 'k1' may be computed, e.g., by: k1=Hash(K1), wherein 'Hash(K1)' denotes the application of a (cryptographic) hash function with K1 as input. Based on key k1 and the remaining parameters, the second confirmation information c2 may be computed, e.g., by c2=HMAC(k1, sA, EA, sB, EB), wherein 'HMAC(x)' denotes computing a hash-based message authentication code with x, e.g.: the set of parameters: k1, SA, EA, sB, EB, as input. A HMAC may be computed based on a (cryptographic) hash algorithm. This hash algorithm may be the hash algorithm mentioned in the above parts and the below parts of the description. Then, after computing the first confirmation information c2, the access point may transmit a second authentication message, Auth-Confirm, which indicates the first confirmation information c2, which is denoted as "Auth-Confirm(c2)", to the device.

The first authentication message may be transmitted before the second authentication message. The second authentication message may be transmitted before the first authentication message. Both authentication messages may be transmitted simultaneously. This principle is denoted by crossed arrows in Fig.3.

After receiving the first authentication message, the access point may verify the first confirmation information c1. Verifying the first confirmation information c1 may include comparing the first confirmation information c1 to the second confirmation information c2.

After receiving the first authentication message, the device may verify the second confirmation information c2. Verifying the first confirmation information c2 may include comparing the first confirmation information c1 to the second confirmation information c2.

If the first confirmation information c1 and the second confirmation information c2 are the same, the SAE handshake may be considered successful. A successful SAE handshake means that the device and the access point share a pairwise master key, PMK. The above keys k and k1, which are the same if the SAE handshake is successful, may be the pairwise master key.

The above example of a SAE handshake is given for explanatory purposes and details one possible implementation. However, this example is not to be considered as limiting the claims to this specific example. Various other forms of SAE handshakes exist and are well known in the prior art. These other forms (versions) of an SAE handshake may be used as well for implementing the above introduced SAE handshake.

The SAE handshake may be executed in conformity with the Simultaneous Authentication of Equals, SAE, protocol. This protocol may be part of the Wi-Fi Protected Access 3, WPA3, security suite. Said protocol may be standardized in a specification provided by the Internet Research Task Force, IRTF, or the Internet Engineering Task Force, IETF, wherein said specification may be 'Request For Comments', RFC 7664. The SAE handshake may also be referred to as Dragonfly handshake. WPA3 may be further specified by a standard for wireless networks. This standard may be IEEE 802.11ax. This standard may also be referred to as 'WiFi-6'.

Advantageously, identifying a hash algorithm based on received data, wherein the received is said confirmation message, reduces the number of hash algorithms that need to be considered when identifying said hash algorithm. E.g., there may be five hash algorithms that need to be considered. Thus, identification of said hash algorithm is made more efficient.

The above embodiment may optionally comprise the additional steps and specifications as discussed in the following embodiments.

Figure 4 shows a table according to an example according to a fourth embodiment of the method for profiling a device by an access point based on a hash algorithm, wherein the hash algorithm is one out of MD5, SHA1, SHA256, BCRYPT, MD5-CRYPT.

The table depicts the above mentioned five alternative algorithms that may be used. For instance, SHA256 may correspond to a profile as discussed above, wherein said profile is a high security profile. As another example, MD5-CRYPT may correspond to a low security profile. As another example, MD5 or SHA1 may correspond to a high efficiency profile, where data needs to be hashed efficiently. BCRYPT may correspond to a profile indicating that the device runs on OpenBSD, open Berkeley Software Distribution, operating system, e.g., a Linux distribution, such as Ubuntu. BCRYPT may correspond to a profile indicating that slow hash computation is required. Furthermore, any one of the above hash algorithms may be linked to (correspond to) using WPA2 or WPA3 or another security protocol for communications between the access point and the device.

Advantageously, using one of the above hash algorithms provides improved security when encrypting a message, e.g., the received data.

The above embodiment may optionally comprise the additional steps and specifications as discussed in the following embodiments.

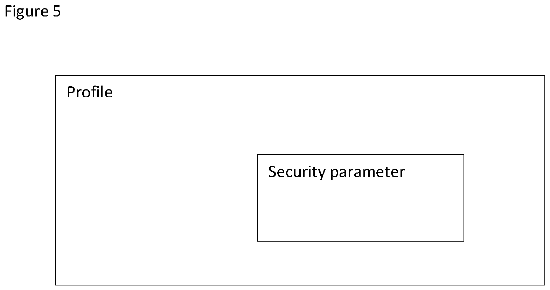

Figure 5 shows a fifth embodiment of the method for profiling a device by an access point based on a hash algorithm, wherein the profile comprises at least one security parameter to be used by the access point when communicating with the device.

The term parameter has been discussed above with respect to figure 1. A security parameter may refer to one out of a set of parameters or to a set of parameters that (is) are used for configuring an apparatus, e.g., an access point or a device, such that an attacker cannot access and/or change the settings (configuration) of the apparatus, or such that an attacker cannot decrypt messages that are/were exchanged between an access point and a device, or such that an attacker cannot perform a denial of service attack.

Specific examples of a security parameter may be an indication of using protected management frames, PMF, for communication between the access point and the device. Another example of a security parameter may be an instruction that password-based authentication shall be used when setting up communications between the access point and the device. Another example of a security parameter may be an indication that the access point shall perform periodical scans for access points which are connected to the network of the access point without permission. Another example of a security parameter may be that the service set identifier, SSID, of the access point shall be visible to other devices, or not.

Advantageously, determining a profile comprising at least one security parameter based on a hash algorithm allows for automating security configurations of the access point, thereby accelerating said configuring and making the configuring of an access point less error-prone.

The above embodiment may optionally comprise the additional steps and specifications as discussed in the following embodiments.

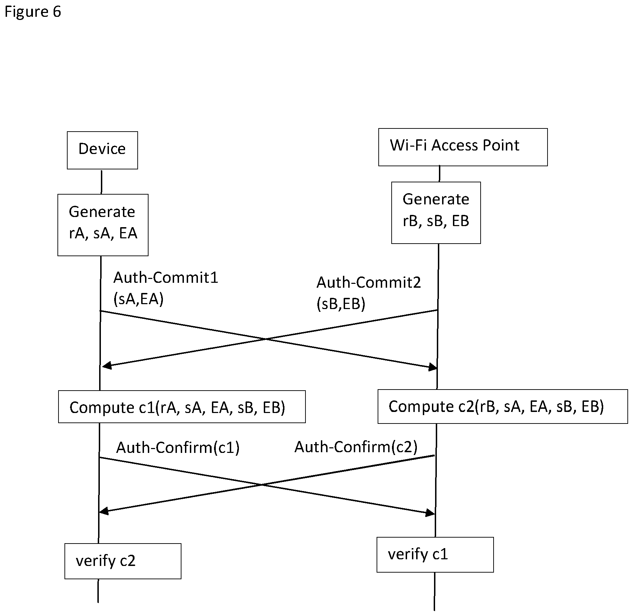

Figure 6 shows an example according to a sixth embodiment of the method for profiling a device by an access point based on a hash algorithm, wherein the access point is a Wi-Fi access point.

Specifically, figure 6 shows the chart depicted in figure 3, wherein the access point of figure 3 is replaced by a Wi-Fi access point.

A Wi-Fi access point may be an apparatus, e.g., an access point or a device, that is configured such that it can perform communications with another apparatus, e.g., a device, based on the specifications provided in one of the known IEEE 802.11 standards. A respective list of IEEE 802.11 standards comprises: IEEE 802.11bn, IEEE 802.11be, IEEE 802.11ax, IEEE 802.11ac, IEEE 802.11n, IEEE 802.11g, IEEE 802.11a, IEEE 802.11b, IEEE 802.11.

Wi-Fi may mean that a respective apparatus, e.g., an access point or a device, is enabled (configured) to exchange data with at least one nearby device (which may be out of a plurality of nearby devices, which may also be an access point) by radio waves. These radio waves may be the 2.4 gigahertz, GHz, band and/or the 5 gigahertz band and/or the 6 gigahertz band. These bands may be divided into channels.

Advantageously, applying the discussed method using a Wi-Fi access point allows for simplified profiling, since, in comparison to the case of using a broadly defined access point as discussed above, the number of possible configurations and parameters related to a device's profile are reduced.

The present embodiment is not solely linked to the specific example of an SAE handshake as discussed with regards to figure 3. The present embodiment may be combined with any of the above or below described embodiments and details, e.g., with the more general concept discussed in the passages discussing the first embodiment.

The above embodiment may optionally comprise the additional steps and specifications as discussed in the following embodiments.

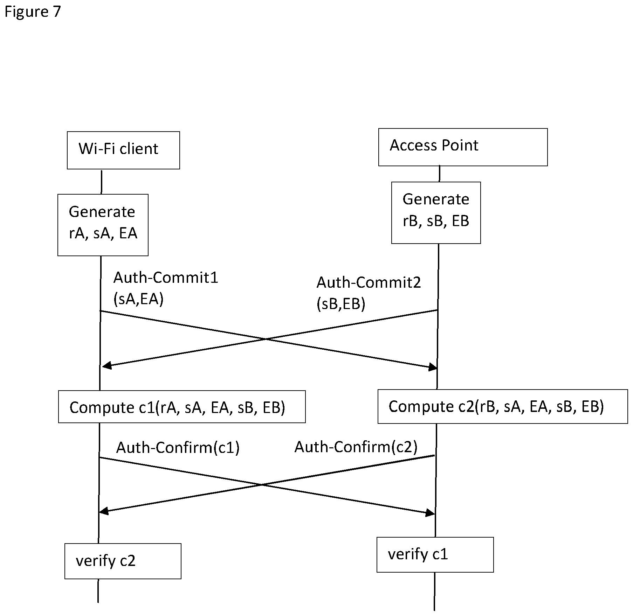

Figure 7 shows an example according to a seventh embodiment of the method for profiling a device by an access point based on a hash algorithm, wherein the device is a Wi-Fi client.

Specifically, figure 7 shows the chart depicted in figure 3, wherein the device of figure 3 is replaced by a Wi-Fi client.

The term Wi-Fi is further discussed above with respect to figure 6, wherein the term 'access point' may be replaced by 'device'. A repetition of this discussion is thus omitted.

A Wi-Fi client may be an apparatus which is configured to (enabled to) connect to an access point via a wireless connection. The apparatus may transmit and receive data and/or messages from the access point using the wireless connection. The apparatus may exchange data and/or messages with the access point using the wireless connection. The transmitting and/or receiving and/or exchanging may be based on specifications provided by one of the IEEE 802.11 standards mentioned above or below.

The client may be included in another end-device. Non limiting examples of an end-device comprise as a laptop, a smartphone, a tablet, a printer, a TV screen, a computer screen. The client may provide a connection between an end-device and a wireless local area network. An end-device may be an apparatus which only transmits, receives, or exchanges data with an access point, a router, a (wireless) local area network, or the internet, but which does not relay, or forward received data to other devices. The client may also be an end-device.

A Wi-Fi client may also be referred to as a W-LAN client, or a WirelessLAN client.

Advantageously, applying the discussed method using a Wi-Fi client allows for simplified profiling, since, in comparison to the case of using a broadly defined device as discussed above, the number of possible configurations and parameters related to a Wi-Fi client's profile are reduced.

The present embodiment is not solely linked to the specific example of an SAE handshake as discussed with regards to figure 3. The present embodiment may be combined with any of the above or below described embodiments and details, e.g., with the more general concept discussed in the passages discussing the first embodiment.

The above embodiment may optionally comprise the additional steps and specifications as discussed in the following embodiments.

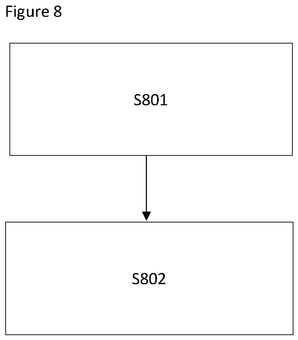

Figure 8 shows an embodiment of a method for assigning a hash algorithm to a device, comprising the steps of learning a profile of the device, S801, and based on the profile, assigning a hash algorithm to the device, S802.

The method may be computer-implemented. There may be a computer program [product] comprising instructions which, when the program is executed by a computer, cause the computer to carry out [the steps of] said method. There may be a computer-readable [storage] medium comprising instructions which, when executed by a computer, cause the computer to carry out [the steps of] said method.

A profile of the device may be a profile as discussed above or below.

A hash algorithm may be a hash algorithm as discussed above or below.

A device may be a device as discussed above or below.

Learning may comprise determining an output based on an input. The determining may be based on a method or an algorithm. The method or algorithm may be carried out by a computer, or a computing means. The method or algorithm may be a machine learning algorithm or an artificial intelligence algorithm. Further examples related to machine learning are discussed below. An output may be the profile of the device. An input may be a property of the device. As a non-limiting example, a property of the device may be one of, a combination of, or all of: a security protocol used by the device, a security level of the device, an encryption method used by the device, an internet usage pattern of the device, an operating system of the device, a manufacturer of the device, an indication of the device being configured to operate based on a version of IEEE 802.11 standard specifications, e.g., IEEE 802.11ax, an indication of the device being configured to operate using a mobile communications network, e.g., a 4G, 5G, 6G networks, wherein said operating may be based on a release of 3GPP standard specifications.

Assigning a hash algorithm based on a profile to a device may comprise configuring the device such that the device uses the hash algorithm when communicating (exchanging messages) with another device, e.g., an access point. The assigning may comprise setting a value in a data set, wherein the data set is stored in the device. Said value may indicate the hash algorithm to be used when communicating. The device may determine the hash algorithm to be used based on said value. It is noted that the step of assigning a hash algorithm may be performed when producing a respective device. However, said step may also be repeated after said device has been produced, and, e.g., sold to a customer. In other words, the step of assigning a hash algorithm may comprise a step of re-assigning another hash algorithm based on said profile. This may comprise assigning a second (new) hash algorithm to a device and deleting the previously assigned hash algorithm from said device. A specific example comprises (the initial) assigning of a first hash algorithm based on a profile to a device, which is followed by removing the respective device configuration and reconfiguring the device such that it uses another (a second) hash algorithm when communicating with another device.

Assigning a hash algorithm based on a profile may further comprise determining (selecting, finding, setting) the hash algorithm based on the profile. Here, one profile may correspond to one hash algorithm. Moreover, one hash algorithm may correspond to one profile or a plurality of profiles.

Advantageously, the above method for assigning a hash algorithm to a device may allow for automated configuration of a device based on its properties.

The above embodiment may optionally comprise the additional steps and specifications as discussed in the following embodiments.

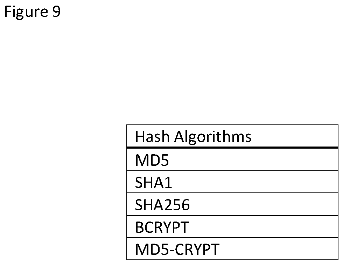

Figure 9 shows a table according to a further embodiment of the method for assigning a hash algorithm to a device, wherein the hash algorithm is one out of MD5, SHA1, SHA256, BCRYPT, MD5-CRYPT.

The mentioned hash algorithms are discussed above at least with respect to figure 4. Repetition of said discussion is omitted.

Advantageously, using any of the above hash algorithms allows for simplified configuration of the device, for instance, because these hash algorithms are standardized.

The above embodiment may optionally comprise the additional steps and specifications as discussed in the following embodiments.

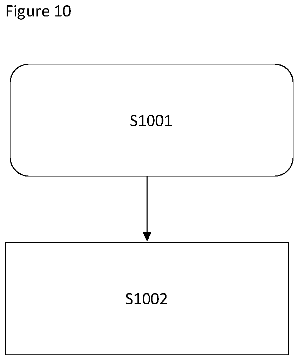

Figure 10 shows a further embodiment of a method for assigning a hash algorithm to a device, wherein learning the profile, S1001, (step S801 in figure 8) comprises determining the profile of the device based on machine learning, S1002.

Machine learning may also be referred to as artificial intelligence. Machine learning may also be a subfield of the field of artificial intelligence. Machine learning may comprise applying a machine-learning algorithm. Based on said algorithm a computer may determine an output based on an input. The input and output may be the input and output as discussed above with respect to figure 8,by way of non-limiting example, in section 'An output may be the profile of the device. An input may be a property of the device...', or as discussed in the below non-limiting example. A non-limiting example of machine learning is unsupervised learning. Another example is supervised learning. In supervised or unsupervised learning, a computer may, based on a respective algorithm, determine at least one pattern or a plurality of patterns from unlabeled data. Unsupervised may mean that no human intervention (input from a human while running the algorithm) is needed. Unsupervised learning may be based on network topologies, wherein 'neurons' are connected. Non-limiting examples of network topologies that may be used comprise a Hopfield network, a Boltzmann machine, a restricted Boltzmann machine, a stacked restricted Boltzmann machine, a Helmholtz machine, an autoencoder, and a variational autoencoder. An example of supervised learning is a k-nearest neighbors, k-NN, algorithm.

An example related to the above machine learning is discussed now.

A machine learning algorithm may automatically categorize a device based on a device's communication pattern and/or security needs (security configuration). Said categorizing may comprise assigning a (appropriate) hash algorithm to said device.

Applying a machine learning algorithm may comprise inputting (by a user or another device) input data to the machine learning algorithm. The input data may be data (packets) that is/are sent by a device to an AP or to another device, wherein said data may have identifiable features. Non limiting examples of said features comprise a (data) packet size, a transmission-frequency, and one or a plurality of security level indicators.

A non-limiting example of a machine learning algorithm is a 'k-Nearest Neighbors (k-NN)' classifier. Said algorithm may be trained on a dataset representing (comprising a list of) at least one device or a plurality of devices, wherein a respective device may be labeled with a corresponding hash algorithm that is used by the respective device. An example of said list is provided in table 3 below:

**Table 3.**

| Device | Label |
|---|---|
| Tablet | SHA3-256 |
| Thermostat | MD5 |
| Camera | MD5 |
| Computer 1 (providing firmware update) | SHA-512 |
| Smartphone 1 | SHA-256 |
| Computer 2 | SHA3-256 |

Applying a machine learning algorithm may comprise outputting output data (by a computer or device performing the method). An example of output data is an indication of a prediction (determination) of a hash algorithm. Said output data may allow for determining whether the machine learning algorithm has been trained successfully or whether further training-iterations are necessary. E.g., the output data may be compared (automatically, e.g., by a computer, or by a user, e.g., a human) to a representative data set comprising correct answers. If the output data matches (is equal to) the representative data, e.g., for a fixed number of runs of the machine learning algorithm, each providing corresponding output data, a respective set of output data is equal to the corresponding representative data, it may be determined that the machine learning algorithm has been trained successfully. E.g., said fixed number may be set to 2. Then, a first run of the machine learning algorithm may output SHA3-256 for input data corresponding to a device 'tablet'. Then, a second run of said algorithm may output MD5 for input data corresponding to a device 'Thermostat'. Thus, it may be determined that the machine learning algorithm has been trained successfully. In another case, the fixed number may be set to 10. Now, a ninth run of said algorithm may output MD5 for input data corresponding to a device 'computer 2'. It may thus be determined that the machine learning algorithm has not been trainer successfully and further training-iterations are necessary.

For unlabeled devices, a machine learning algorithm, such as a k-NN algorithm (classifier), may predict (determine) a (most suitable) hash algorithm based on said dataset. E.g., said machine learning algorithm may determine a hash algorithm based on a similarity of communication patterns and/or a similarity of security requirements between the unlabeled device and the device(s) represented in the dataset.

For example, an unlabeled device may be a first camera. A machine learning algorithm may be a k-NN classifier. Said camera may have a low to moderate security level. Said camera may transmit (data) packets with high transmission-frequency, and a security level indicator indicating low security level. Based on said packets as input, said machine learning algorithm may determine MD5 as hash algorithm to be applied when communicating with the camera. As another example, an unlabeled device may be a tablet. Said tablet may have a high security level. A machine learning algorithm may be a support vector machine, SVM. Said tablet may transmit a message containing a HMAC to an AP, or a router. Said message may comprise a security level indicator, wherein said indicator indicates a high security level. Said message may be input to the SVM. Based on the indicated security level, the SVM may determine SHA3-256 as hash algorithm for the tablet.

Advantageously, a profile can be determined more accurately based on machine learning techniques. Thus, configuration accuracy of a network comprising access points and devices can be increased. Thereby, the number of re-configurations can be reduced. Thus, the efficiency when setting up a network can be improved.

The above embodiment may optionally comprise the additional steps and specifications as discussed in the following embodiments.

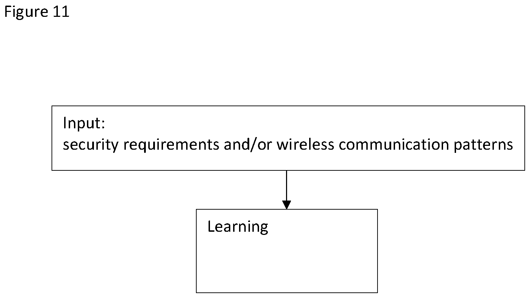

Figure 11 shows a further embodiment of a method for assigning a hash algorithm to a device, wherein the learning of the profile of the device, S801, is based on at least one out of the device's security requirements, and the device's wireless communication pattern.

The term profile may comprise any of the concepts discussed with regards to 'profile' above and below. Repetition of said discussion is therefore neglected.

Learning a profile based on one of the mentioned parameters, e.g., the device's security requirements and/or the device's wireless communications patterns, may comprise inputting one or both of said parameters to an algorithm, e.g., the above machine learning algorithm, used for determining the profile. For instance, one or both of said parameters may be input to the machine learning (algorithm) discussed above. Learning a profile based on one of the mentioned parameters may comprise outputting said profile based on the result of applying the algorithm to the input. E.g., said learning may comprise outputting a profile as a result of the machine learning, wherein the machine learning is performed based on one or both parameters as input.

In other words, a device's security requirements may refer to a configuration-specification of said device, wherein said configuration-specification may comprise a parameter that shall be used for configuring said device. Said parameters may relate to encrypting messages transmitted to another device or received from another device. One example of said parameter may be a wireless security protocol to be used by the device. The security protocol may be, for instance, wired equivalent privacy (WEP), wireless LAN protected access, WPA, WPA2, or WPA3. Another example of said parameter may be the number of bits to be used for encryption, e.g., the output size of a hash algorithm. Said number of bits may be 64, 128, 192, 256, 384 bits. Another example of said parameter may be a Media Access Control, MAC, address of the device. The above configuration-specification may be a data-set indicating that said device shall be protected against one or a plurality of attacks. E.g., an attack may be one out of address spoofing, a man in the middle attack, a denial of service attack, or an (offline) dictionary attack. The above configuration-specification may be a data-set indicating that said device requires (or does not require) authentication of an access point or another device to which it shall connect. The above configuration-specification may be a data-set indicating that the encryption protocol used by said device shall provide forward secrecy, or shall provide collision resistance up to a pre-determined number of computations, such as 2 to the power of 69. The configuration-specification may be table denoting correspondences between a security-level and a hash algorithm to be used. For instance, the below table 2 may be used:

**Table 2**

| Security level | Hash Algorithm |
|---|---|
| Low | MD5 |
| Middle | SHA1 |
| High | SHA256 |

A device's wireless communication pattern may be a sequence (series) of messages, wherein said messages may be transmitted by said (first) device to another (second) device or a plurality of other devices, and/or received by said (first) device from the other (second) device or the plurality of other devices. Said sequence of messages may be transmitted/received in the manner discussed above over a time-interval. In other words, said wireless communication pattern may be referred to as an arrangement of successive messages over a predetermined time-interval. The transmitting and/or receiving of said messages may be based on a wireless connection. The wireless connection may connect said (first) device to another (second) device, e.g., to a device out of the plurality of other devices. Each device out of the plurality of other devices may be connected to the first device by a respective wireless connection. Examples of messages comprise data packets, or frames. A frame may be transmitted over a channel. A frame may be an IEEE 802.11 frame. A channel may be part of a frequency band. A frequency band may be a 2.4 GHz frequency band, a 5 GHz frequency band, a 6 GHz band, and so on. Each channel may have a channel width expressed in Megahertz, MHz. E.g., a channel may have a width of 22 MHz, 16.25 MHz, 20 MHz, 40 MHz, 80 MHz, 160 MHz. A frequency band may comprise one or a plurality of channels. The first device and the second device may transmit/receive frames from the respective other device via a channel. Each message (or frame) may comprise information, e.g., control information and/or usage data. Examples of frames comprise an authentication frame, a probe request frame, a probe response frame, an association request frame, an association response frame, a management frame, a dissociation frame. Specifically, said frames may be frames compliant with a standard specification according to IEEE 802.11. However, the above examples are non-limiting. For instance, the above messages may also be transmitted in 4G or 5G or any later-stage wireless telecommunications network. E.g., a message may be an uplink message, or a downlink message transmitted between a terminal (UE) and a node (base station), wherein said message comprises control information or usage data. Said data may be organized in units of frames, wherein said frames may comprise a number of subframes, wherein said subframes may comprise a number of slots, wherein said slots may comprise a number of symbols. A frame, subframe, slot, symbol may correspond to a time-interval. For instance, one slot may comprise 14 symbols, one subframe may comprise two slots, and 14 symbols may correspond to a time interval of 0.5 milli-seconds, 0.5 ms.

Here, learning a profile may comprise the step of determining, as said profile, a set of configuration parameters of the device, such that the device's security requirements are being met.

Advantageously, learning a profile based on security requirements and/or wireless communication patterns allows for determining a profile that reflects communication patterns and/or security requirements. Thereby, said profile more accurately reflects security requirements and/or communication patterns.

The above embodiment may optionally comprise the additional steps and specifications as discussed in the following embodiments.

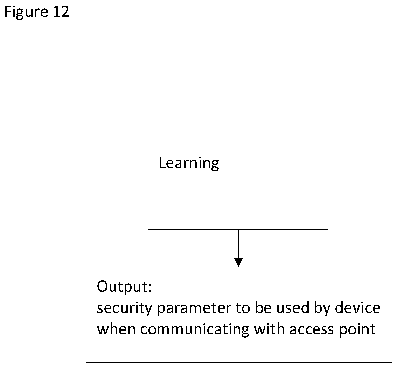

Figure 12 shows a further embodiment of a method for assigning a hash algorithm to a device wherein the profile (that is learned) comprises at least one security parameter to be used by the device when communicating with an access point.

The security parameter may be a security parameter as discussed above. Repetition of the discussion is thus omitted.

The communicating may be a communicating as discussed above. Repetition of the discussion is thus omitted.

The device and access point may be a device and access point as discussed above. Repetition of the discussion is thus omitted.

Advantageously, this embodiment allows for automated, thus more efficient and less error-prone setting of security parameters at a device.

The above embodiment may optionally comprise the additional steps and specifications as discussed in the following embodiments.

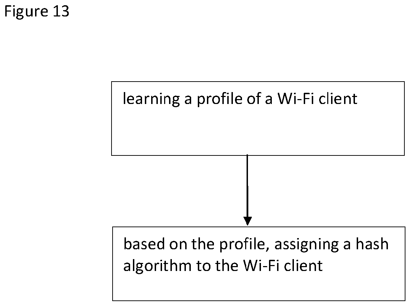

Figure 13 shows an example according to a further embodiment of the method for assigning a hash algorithm to a device wherein the device is a Wi-Fi client.

The Wi-Fi client may be the 'Wi-Fi client' as discussed for one of the above embodiments.

Advantageously, applying the discussed method to a Wi-Fi client allows for simplified profiling, since, in comparison to the case of using a broadly defined device as discussed above, the number of possible configurations and parameters related to a Wi-Fi client's profile are reduced.

The above embodiment may optionally comprise the additional steps and specifications as discussed in the following embodiments.

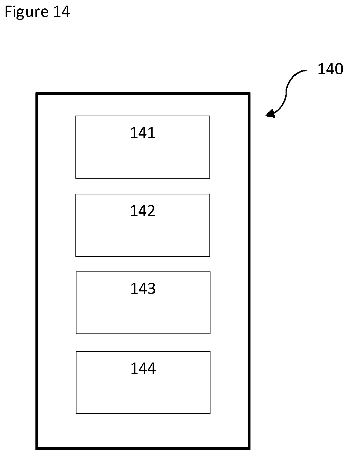

Figure 14 shows an embodiment of an access point 140 comprising means 141, 142, 143, 144 for carrying out the method for assigning a hash algorithm to a device as discussed throughout the above embodiments.

Specifically, the access point 140 may comprise a receiving means 141 and/or a transmitting means 142, and/or a storage means 143 and/or a control means 144. A receiving means 141 may comprise one antenna or a plurality of antennas that may be used for receiving messages from another device by wireless communications. Moreover, said receiving means may comprise a cable-based (wired) interface which may be configured to allow the access point to receive messages/data from a router by a wired connection. A transmitting means 142 may comprise one or a plurality of antennas that may be used for transmitting messages to another device by a wireless connection. Moreover, said transmitting means may comprise an interface which may be configured to allow the access point to transmit messages or data via a wired connection. The antenna(s) comprised in the exemplary receiving means and the antenna(s) in the exemplary transmitting means may be the same. More specific examples of said antennas comprise the antennas used in base station or node of a 4G, 5G, or any later or earlier type of telecommunications network. Another specific example of said antennas comprises the antennas built into a Wi-Fi access point. A storage means 143 may be configured to store the types of data, profiles, information, etc. as discussed throughout the above and below embodiments. The storage means may be volatile or non-volatile storage means. Specific examples of a storage means comprise a hard drive, a cache memory, a random access memory, a solid state drive. A control means 144 may be configured to execute the steps according to the embodiments of a method for profiling a device by an access point as discussed above, e.g., with respect to figures 1 to 7. A non-limiting example of said control means is central processing unit, CPU. Said control means may also be a micro-controller. Another example of said control means may be a field programmable gate array, FPGA. Said control means may be a processor.

The above embodiment may optionally comprise the additional steps and specifications as discussed in the above embodiments.

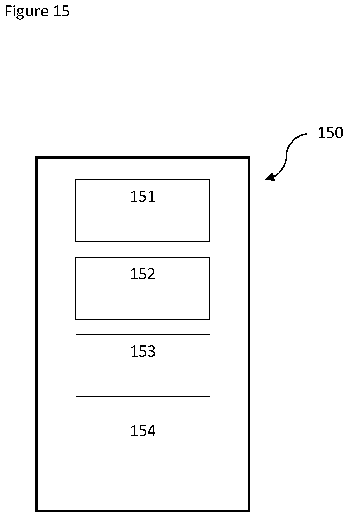

Figure 15 shows an embodiment of an apparatus 150 comprising means 151, 152, 153, 154 for carrying out the method for assigning a hash algorithm to a device as discussed throughout the above embodiments.

Specifically, the access point 150 may comprise an output means 151 and/or an input means 152, and/or a storage means 153 and/or a control means 154. An output means 151 may be referred to as a means configured to transmit data to another device, e.g., by wireless or wired connection. A specific example of an output means is a universal serial bus, USB, interface. Another example is a HDMI interface. Another example is a network interface controller of a computer. An input means 152 may be referred to as a means configured to receive data from another device, e.g., by wireless or wired connection. A specific example of an input means is a universal serial bus, USB, interface. Another example is a HDMI interface. Another example is a network interface controller of a computer. Moreover, said output means may comprise an interface which may be configured to allow the access point to transmit messages or data via a wired connection. The input means and the output means may be implemented as an input/output means. A storage means 153 may be configured to store the types of data, profiles, information, etc. as discussed throughout the above and below embodiments. The storage means may be volatile or non-volatile storage means. Specific examples of a storage means comprise a hard drive, a cache memory, a random access memory, a solid state drive. A control means 154 may be configured to execute the steps according to the embodiments of the method for assigning a hash algorithm to a device as discussed above, e.g., with respect to figures 8 to 13. A non-limiting example of said control means is a central processing unit, CPU. Said control means may also be a micro-controller. Another example of said control means may be a field programmable gate array, FPGA. Said control means may be a processor.

The above embodiment may optionally comprise the additional steps and specifications as discussed in the above embodiments.

THE BELOW DISCUSSES FURTHER ASPECTS AND NON-LIMITING EXAMPLES RELATED TO THE ABOVE EMBODIMENTS.

As discussed above, different users or devices within a wireless network often have distinct needs and preferences. These requirements can vary widely based on factors such as security protocols, internet usage patterns, bandwidth demands, and compatibility with other network components. To effectively cater to these diverse requirements, it is essential to profile each device individually. This profiling process involves configuring specific settings and parameters tailored to the unique characteristics of each device. Traditionally, device profiling has been performed manually by users through the interface of access points, APs, or other network management tools. Users would need to navigate through various settings and options to customize the configuration according to their device's needs.

However, this is not a very effective method and causes different problems. For example, the user may not know how to profile, the user may profile incorrectly, and the user may not know exactly what the device requires and how it works. Therefore, an automatic profiling mechanism is required.

A principle of the above and below discussed concepts lies in the automatic profiling of wireless devices using hash algorithms. Categorizing devices based on their security needs and usage patterns, etc. and assigning each category a specific hash algorithm, enables automatic device profiling. APs identify the hash types associated with connected devices, allowing for seamless understanding of device profiles. This eliminates the need for manual profiling by users and ensures accurate and tailored security measures. The invention also offers adaptability through the ability to dynamically change the hash algorithm associated with a device category, enhancing network security in response to evolving threats. Therefore, the principle of the invention facilitates efficient and secure wireless network management through automated device profiling based on hash algorithms.

WPA is a data encryption specification for a wireless LAN. There are different versions of WPAs. The latest one is WPA3. In WPA3, Diffie-Hellman key exchange is used. This key-exchange algorithm is a secure algorithm that offers high performance, allowing two computers to publicly exchange a shared value without using data encryption. This exchanged information is protected with a hash function. There are several hash algorithms in the literature.

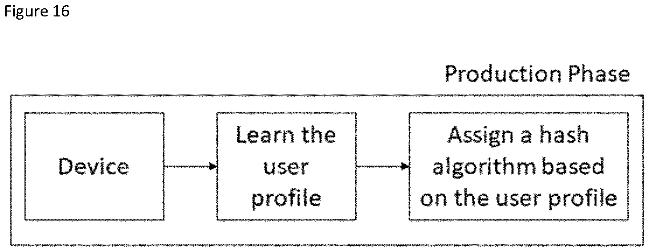

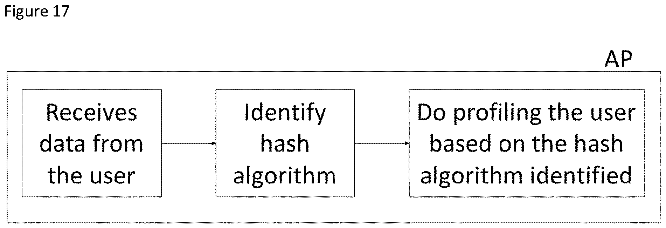

These hash algorithms may be used for profiling. For this profiling first, devices are categorized based on their security requirements, Internet usage, etc. This categorization is made in the production phase of the device. Categorization can be made by experienced researchers or with machine learning algorithms such as supervised learning, or unsupervised learning. Also, categorization can be made in the IEEE 802.11 standards. Then, each category uses a different hash algorithm. (These hash algorithms can be MD5, SHA1, SHA256, BCRYPT, and MD5-Crypt.) Afterward, AP identifies the hash types, and based on the hash type, AP can understand the profile of the device. Therefore, automatic profiling is made. Here note that this is a standard-essential patent. We want to add two features to the standards. First, one is determining the security levels of the devices and making standard categorizations for all the types of devices. The second is making profiling by AP based on the Hash algorithm used. The production phase of the device for user profiling is illustrated in figure 16, while how AP makes profiles of the user is illustrated in Figure 17.

POSSIBLE IMPORTANT ASPECTS RELATED TO THE ABOVE ARE AS FOLLOWS:
- Using a hash algorithm for profiling
- Categorizing the devices based on their security requirements, Internet usage, etc., and using a different hash algorithm for each category.
- AP identifies the hash types, and based on the hash type AP can understand the profile of the device.
- Automatic user profiling
- User profile categorization with unsupervised learning algorithms
- If the category of the device is changed, hash algorithm of the device can be changed with software update.
- If the device desires different types of categories, hash algorithm of the device can be changed adaptively based on the requirements

POSSIBLE ADVANTAGES RELATED TO THE ABOVE EMBODIMENTS:
Enhanced Security: utilizing hash algorithms for device profiling offers improved security measures for wireless networks. Each device category is associated with a specific hash algorithm, ensuring that security measures are tailored to the unique requirements of different devices.

Automatic Profiling: eliminating the need for manual profiling by users, which is prone to errors and inconsistencies. With automatic profiling capabilities, devices can be categorized and profiled seamlessly, enhancing overall efficiency and accuracy.

Customized Network Management: categorizing devices based on their security requirements, Internet usage patterns, and other relevant criteria, enables customized network management strategies. This allows network administrators to implement tailored security policies and optimize network performance according to the specific needs of different device categories.

Adaptability: The above embodiments may offer flexibility and adaptability in device profiling. With the ability to dynamically change the hash algorithm associated with a device category through software updates, the invention ensures that network security measures can be updated and adapted in response to evolving threats and requirements.

Standardization: The above embodiments facilitate standardization in device categorization and profiling, making it easier for manufacturers, service providers, and network administrators to implement consistent security measures across different networks and devices.

Efficient Resource Allocation: automatically profiling devices and understanding their specific requirements, enables more efficient allocation of network resources. This helps optimize network performance and ensures that resources are allocated where they are most needed.

Simplified Network Management: With automatic device profiling and categorization, network management tasks become more streamlined and manageable. This reduces the burden on network administrators and allows for more effective management of complex wireless networks.

Improved User Experience: enhancing security measures and optimizing network performance, ultimately leads to a better user experience for device users. Users can enjoy secure and reliable connectivity without having to worry about manual configuration or security vulnerabilities.

### INDUSTRIAL APPLICABILITY /POSSIBLE FIELDS OF USE

The proposed invention finds application in the field of wireless communication and networking technologies, particularly in securing and optimizing the performance of WLAN. It is relevant to industries involved in the development, manufacturing, and deployment of networking devices such as APs.

Specifically, the invention may be applicable in scenarios where there is a need to automatically profile and categorize different devices based on their security requirements, usage patterns, and other relevant characteristics. This includes but is not limited to:
Networking Equipment Manufacturers: Companies involved in manufacturing routers, access points, and other networking devices can utilize this invention to enhance the security and performance of their products. By incorporating automatic profiling mechanisms based on hash algorithms, they can offer more customized and secure networking solutions to their customers.

Telecommunication Service Providers: Telecom companies offering Wi-Fi services can benefit from this invention by ensuring that their networks are efficiently managed and secured. By implementing automatic device profiling, they can optimize network resources and provide tailored services to different user groups.

Enterprise IT Departments: Organizations managing large-scale WLANs within their premises can employ this invention to streamline network management processes. By automatically categorizing and profiling connected devices, they can enforce security policies more effectively and optimize network performance.

Cybersecurity Solutions Providers: Companies offering cybersecurity solutions can integrate this invention into their products to enhance network threat detection and mitigation capabilities. By leveraging automatic device profiling based on hash algorithms, they can identify and respond to potential security threats more efficiently.

### List of features:

S101 - receiving data from a device step
S102 - identifying a hash algorithm based on the received data step
S103 - based on the hash algorithm, determining a profile corresponding to the device step
S201 - receiving data from a device step
S202- identifying a hash algorithm based on the received data step
S203 - based on the hash algorithm, determining a profile corresponding to the device step
S204 - configuring an access point based on the determined profile step
S801 - learning a profile of the device step
S802 - based on the profile, assigning a hash algorithm to the device step
S1001 - learning a profile of the device step
S1002 - determining the profile of the device based on machine learning step
140 - access point
141 - receiving means
142 - transmitting means
143 - storage means
144 - control means
150 - apparatus
151 - output means
152 - input means
153 - storage means
154 - control means

## Claims

1. A method for profiling a device by an access point based on a hash algorithm, comprising the steps of:
by the access point, receiving data from the device,
identifying a hash algorithm based on the received data, and
based on the hash algorithm, determining a profile corresponding to the device.

2. The method according to claim 1 comprising the further step of:
configuring the access point based on the determined profile.

3. The method according to any one of claims 1 to 2, wherein the received data is a confirmation-message used in a Simultaneous Authentication of Equals handshake between the access point and the device.

4. The method according to any one of claims 1 to 3, wherein the hash algorithm is one out of MD5, SHA-1, SHA-256, BCRYPT, MD5-CRYPT, SHA3-256, SHA-512.

5. The method according to any one of claims 1 to 4, wherein the profile comprises at least one security parameter to be used by the access point when communicating with the device.

6. The method according to any one of claims 1 to 5, wherein the access point is a Wi-Fi access point.

7. The method according to any one of claims 1 to 6, the device is a Wi-Fi client.

8. Method for assigning a hash algorithm to a device, comprising the steps of:
learning a profile of the device, and
based on the profile, assigning a hash algorithm to the device.

9. The method according to claim 8 wherein the hash algorithm is one out of MD5, SHA-1, SHA-256, BCRYPT, MD5-CRYPT, SHA3-256, SHA-512.

10. The method according to any one of claims 8 and 9, wherein the learning the profile comprises determining the profile of the device based on machine learning.

11. The method according to any one of claims 8 to 10, wherein the learning of the profile of the device is based on at least one out of the device's security requirements, and the device's wireless communication patterns.

12. The method according to any one of claims 8 to 11, wherein the profile comprises at least one security parameter to be used by the device when communicating with an access point.

13. The method according to any one of claims 8 to 12, wherein the device is a Wi-Fi client.

14. An access point comprising means for carrying out the method according to any one of claims 1 to 7.

15. An apparatus comprising means for carrying out the method according to any one of claims 8 to 13.
